# EUROPEAN PATENT APPLICATION

(11) **EP 4 201 210 A1**
(43) Date of publication of application: **28.06.2023**
(21) Application number: 21216769.6
(22) Date of filing: 22.12.2021
(51) Int. Cl.: A21D 2/18, A21D 13/047, A21D 13/062

(54) **OAT-BASED BISCUITS WITH SLOWLY AVAILABLE GLUCOSE**

(71) Applicant: Katholieke Universiteit Leuven, 3000 Leuven (BE)
(72) Inventor: Delcour, Jan, 3001 Heverlee (BE); Mulargia, Leonardo Ignazio, 3000 Leuven (BE); Lemmens, Elien, 3211 Binkom (BE)

(57) **Abstract**

The invention relates to biscuits with a slowly-digestible-starch-over-total-availablestarch ratio of the biscuit of at least 40%, the biscuit comprising oat-based starchy ingredients and non-oat starchy ingredients, wherein the total amount of starchy ingredients comprises at least 55 wt% of the total weight of the biscuit, wherein the biscuit comprises at least 15 wt% oat-based starchy ingredients, and wherein the ratio (w/w) of oat-based starchy ingredients over non-oat starchy ingredients is between 1/4 and 4/1.

## Description

### FIELD OF THE INVENTION

The invention relates to biscuits with slowly available glucose, and to biscuits comprising oat.

### BACKGROUND OF THE INVENTION

Consumers are increasingly looking for health benefits of their food. As part of this trend, there has been increasing demand for oat-based food products. Such oat-based starchy ingredients contain substantial amounts of oat β-glucans. Consumption of appropriate amounts of oat β-glucans reduces the levels of blood cholesterol, as described in a health claim granted by *e.g.* the European Food Safety Authority (EFSA) and the Food and Drug Administration (FDA). In order to bear the EFSA health claim, foods should provide at least 3 g of oat beta-glucan per day. The FDA claim specifies that the daily intake of 3 g (or more) of soluble fiber from whole oats reduces the risk of coronary heart disease. Moreover, in order to bear the FDA claim, food products should contain at least 0.75 g of soluble fiber from whole oats.

As part of the same trend, the consumer is interested in starchy food products that provide a slow release of carbohydrates and therefore have a long-lasting energy release. The advantages of consumption thereof have been recognized by EFSA. Benefits are linked to diabetes management and effects on satiety, calorie intake and mental and physical performance. The starch fraction that is slowly digested (slowly digestible starch; SDS) is responsible for this sustained release of energy. Rapidly digestible starch (RDS) provides energy for a shorter time than SDS.

Biscuits are consumed as snacks to provide energy in addition to the energy provided by conventional meals. Biscuits that provide a slow release of carbohydrates and therefore have a long-lasting energy release are beneficial for consumers' health. Before baking, the dough that is used for biscuit making comprises a significant amount of slowly digestible starch. However, during the baking process, this amount of SDS decreases as a result of starch gelatinization in the process. Starch gelatinization refers to the melting of starch crystallites. This results in increased enzyme accessibility during digestion and, hence, in increased digestibility. When heating starch granules in excess water, the granules first swell. When the gelatinization temperature is reached, starch crystallites melt and starch polymers (amylose and amylopectin) leach out of the granules. In highly concentrated systems, such as biscuit doughs, actual leaching of polysaccharides from the granules may be limited, but the progressive melting of the crystalline domains may still occur. It will be understood in the following that long-lasting energy would imply that the amount of slowly digestible starch, measured by slowly available glucose (SAG), of the final product using the Englyst method is above 15.0 g/100 g of biscuit [Englyst et al. (1999) Am. J. Clin. Nutrition 69(3), 448-454; Englyst et al. (1996) Br. J. Nutrition 75(3), 327-337; Englyst et al. (2003) Br. J. Nutrition 89(3), 329-339]. In particular, there is still a need for a method for producing an oat-based biscuit which contains high amounts of SDS.

### Summary of the invention

The present invention relates to ready-to-eat biscuits. More specifically, the present disclosure is concerned with a ready-to-eat oat-based biscuit having a large amount of slowly digestible starch and thus providing a sustained release of energy.

The invention relates to a method for producing a biscuit containing at least 15 wt% oat-based starchy ingredients, at least 20 wt% non-oat starchy ingredients, 5 wt% to 20 wt% fat and at most 30 wt% sugar relative to the total weight of the biscuit, wherein the slowly-digestible-starch-over-total-available-starch ratio of the biscuit is at least 40%, the method comprises steps of
- mixing starchy ingredients with fat, sugar and at least 6.8 wt% added water relative to the total weight of the dough, to form a dough;
- sheeting the dough and shaping the dough into the shape of a biscuit; and
- baking the biscuit;

Herein oat-based starchy ingredients comprise oat flours and/or wholegrain oat flours and/or oat flakes;

Herein non-oat starchy ingredients comprise non-oat flours and/or non-oat wholegrain flours and/or non-oat (industrially) isolated starches and/or non-oat flakes;
wherein the total level of both oat-based and non-oat starchy ingredients comprises at least 55 wt% of the total weight of the biscuit.

The invention is further summarized in the following statements:
1. A biscuit with a slowly-digestible-starch-over-total-available-starch ratio of the biscuit of at least 40%, the biscuit comprising oat-based starchy ingredients and non-oat starchy ingredients, wherein
   - the total amount of starchy ingredients comprises at least 55 wt% of the total weight of the biscuit,
   - wherein the biscuit comprises at least 15 wt% oat-based starchy ingredients-wherein the ratio (w/w) of oat-based starchy ingredients over non-oat starchy ingredients is between 1/4 and 4/1.
2. The biscuit according to statement 1, wherein the oat-based starchy ingredients is other than (industrially) isolated oat starch.
3. The biscuit according to statement 1 or 2, wherein the biscuit comprises between 5 wt% to 20 wt% fat.
4. The biscuit according to any one of statements 1 to 3, wherein the biscuit comprises at most 30 wt% sugar.
5. The biscuit according to any one of statements 1 to 4, wherein the biscuit comprises between 5 wt% to 20 wt% fat and comprises at most 30 wt% sugar.
6. The biscuit according to any one of statements 1 to 5, wherein the biscuit comprises at least 20 wt% non-oat starchy ingredients.
7. The biscuit according to statement 6, wherein the non-oat starchy ingredient is durum wheat semolina.
8. The biscuit according to any one of statements 1 to 7, wherein herein the oat-based starchy ingredient comprises at least 30, 40, 50, or 60 wt% oat flakes.
9. The biscuit according to any one of statements 1 to 8, wherein the non-oat starchy ingredient comprises maximum 30, 40, 50 or 60 wt% (industrially) isolated starch.
10. The biscuit according to statement 9, wherein the starch is maize starch.
11. The biscuit according to any one of statements 1 to 10, which has a slowly available glucose value of at least 15.0 g/100 g of biscuit.
12. A method for producing a biscuit with a slowly-digestible-starch-over-total-available-starch ratio of at least 40%, the biscuit comprising oat-based starchy ingredients and non-oat starchy ingredients the method comprising:
   mixing starchy ingredients with fat, sugar and added water relative to the total weight of the dough, to form a dough;
   sheeting the dough and shaping the dough into the shape of a biscuit; and baking the biscuit,
   wherein the starchy ingredients are oat-based starchy ingredients and non-oat starchy ingredients wherein the ratio of oat-based starchy ingredients over non-oat starchy ingredients is between 1/4 and 4/1,
   in amounts to obtain a biscuit with a total amount of starchy ingredients of at least 55 wt% of the total weight of the biscuit, and comprising at least 15% wt oat based starchy ingredients other than (industrially) isolated oat starch.
13. The method according to statement 12, mixing starchy ingredients with fat, sugar and up to 12.1 wt% added water.
14. The method according to statement 12 or 13, mixing starchy ingredients with fat, sugar and between 6.8 and 12.1 wt% added water.

### DETAILED DESCRIPTION OF THE INVENTION

The present disclosure will now be further described. In the following passages different aspects of the disclosure are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

The present invention solves the problem with making oat-based cookies in that they mostly have high glycemic indices as oat starch digests relatively fast. This may be related to the molecular structure and/or organization of oat starch. As a consequence, oat-based cookies have low SDS contents.

The methods of the present invention result in changing the particle size distribution and the degree of endosperm cell wall intactness of starch in the core of the oat flour particles. The use of oat flakes can improve the SDS content. The starch coming from the flakes has less contact with the added water during dough making, and thus most likely gelatinizes to a lesser extent than, for example, the starch present in a finely ground flour. Consequently, oat flake starch is a good candidate for helping to increase the level of SDS. Flakes also require less hydration than flours. However, using too many flakes is not ideal for biscuits since consumers do not expect to see a high flake content in a biscuit. The texture of biscuits with too many flakes is chewy and parts of the biscuit can remain stuck to the teeth. In particular, these biscuits can be denser and have a flaky/sandy texture.

Replacing part of the oat-based ingredients in the dough formula of the biscuit by non-oat starchy ingredients that contain starches with lower glycemic indices may increase the product's SDS content.

Increasing the starch content, the source of SAG, in the dough formula of the biscuit may also increase the product's SDS content. This could be done by e.g. replacing (wholegrain) flours and/or flakes by (industrially) isolated starches. However, this could negatively impact the process-ability of the dough. The methods and composition of the present invention address this problem.

For improving the poor process-ability of the dough, more water can of course be added to the dough. However, above a certain concentration, water triggers gelatinization of starch during baking of the biscuit and this results in an undesirably low SDS content in the baked biscuit. Therefore, the long-lasting energy property can be lost. Beneficial to reduce the amount of water required in the dough is adding durum wheat semolina as ingredient. Indeed, due to its larger particle size distribution compared to flour or whole meal, about 2-3% less water is needed to obtain a process-able dough. As a result energy costs will be reduced and the throughput/flow rate of the production process will be increased.

The dough can also contain polyols or soluble fibers, such as fructo-oligosaccharides, polydextrose and resistant dextrins. Polyols and soluble fibers mimic sugar behavior during processing and hence improve the process-ability of the dough. However, these ingredients can raise gastrointestinal tolerance issues.

The oat-based biscuit has a slowly-digestible-starch-over-total-available-starch ratio [SDS/(SDS+RDS)] of at least 31 wt%, at least 35 wt%, at least 38 wt%, or at least 40 wt% [RDS is rapidly digestible starch, SDS is slowly digestible starch]. The highest ratio will preferably be at most 65 wt%, at most 70 wt%, at most 75 wt%, or at most 80 wt% for digestibility reasons. Total available starch includes SDS and RDS. The difference between total available starch and total starch is that total available starch does not include resistant starch, *i.e.* starch that cannot be digested in the small intestine.

RDS is rapidly broken down into glucose during digestion and is thus rapidly made available to be taken up in the blood stream. As a result, RDS rapidly increases the blood glucose level after consumption, which can lead to the deregulation of insulin and glucagon levels in the blood stream. RDS only provides energy for a fairly short time period. In contrast, SDS is slowly assimilated by the body which results in a sustained release of energy.

SDS levels can be characterized by quantifying **SAG** [slowly available glucose] according to the method developed by Englyst (Englyst *et al.*, 1996 cited above; Englyst *et al.*, 1999, cited above; Englyst *et al.*, 2003, cited above). SAG refers to the amount of glucose that is slowly absorbed in the human small intestine. In the products of the present invention, the only source of SAG is the product's SDS. Rapidly available glucose (**RAG**) refers to the amount of glucose that is rapidly absorbed in the human small intestine.

For determining the SDS content of biscuits according to the method described by Englyst, biscuit samples are first ground. The biscuit samples are then subjected to an enzymatic digestion with invertase, pancreatic alpha-amylase and amyloglucosidase under standardized conditions. Parameters including pH, temperature, viscosity and mechanical mixing are adjusted to mimic gastrointestinal conditions. After 20 and 120 min of digestion, respectively, glucose levels are measured. The glucose level after 20 min of digestion is referred to as RAG while that after 120 min of digestion is referred to as available glucose (**AG**). SAG is then calculated by subtracting RAG from AG (SAG = AG - RAG). Hence, SAG corresponds to the glucose fraction released between 20 and 120 minutes of digestion. Free glucose (**FG**), including glucose released from sucrose, is obtained by a separate analysis. RDS is then calculated by subtracting FG from RAG (RDS = RAG - FG). The oat-based biscuit has at least 15 g SAG/100 g biscuit, at least 17 g SAG/100 g biscuit, at least 19 g SAG/100 g biscuit, or at least 21 g SAG/100 g biscuit. The SAG will preferably be at most 42.5 g/100 g biscuit, at most 45.0 g/100 g biscuit, at most 47.5 g/100 g biscuit, or at most 50.0 g/100 g biscuit.

The biscuit is formed from a dough which comprises starchy ingredients, fat, sugar and added water. The starchy ingredients comprise oat-based starchy ingredients and non-oat starchy ingredients.

In the United States, the term "**cookies**" refers to products that are made from soft wheat flour and that are characterized by high sugar and shortening and low water levels while similar products made in Europe and the United Kingdom are referred to as "**biscuits**" (Delcour, J.A. & Hoseney, R.C. (2010). Principles of Cereal Science and Technology, 3rd ed. pp 211-213. St. Paul, MN, USA: AACC International Press.). In the context of the present invention, however, the terms biscuits and cookies are used interchangeably. They refer to baked products made from starch sources such as (cereal) flours and flakes. They can also contain (industrially) isolated starches such as those of wheat, maize, rice, cassava, pea and potato. They are typically small and leavened with baking powder, baking soda or sometimes yeast. They are typically sweet and have a crunchy texture. They can contain inclusions and fillings. They are ready-to-eat in the sense that they are a complete and final product suitable for sale and consumption.

Oat-based food products are here defined as products that contain at least 15 wt%, at least 17.5 wt%, at least 20 wt%, or at least 22.5 wt% oat-based starchy ingredients other than (industrially) isolated oat starch.

The term "**oat-based starchy ingredients**" as used herein refers to oat flours and/or wholegrain oat flours and/or oat flakes.

The term "**non-oat starchy ingredients**" as used herein refers to non-oat flours and/or non-oat wholegrain flours and/or non-oat (industrially) isolated starches and/or non-oat flakes. These products generally comprise at least 50% *w*/*w* starch. The total amount of starchy ingredients in the biscuit obtained by the method of the disclosure comprises at least 55 wt% of the biscuit.

"**Wholegrain flours**" differ from "**refined flours**", the latter referring to flours made from endosperm only. Wholegrain flour is produced directly or indirectly from whole grains comprising endosperm, bran and germ. The wholegrain flour can also be reconstituted from separate endosperm (for example refined flour), bran and germ, respectively, in ratios that provide the reconstituted flour with the same composition as wholegrain flour directly produced from grains that still retain bran and germ.

Oat-based starchy ingredients form at least 15 wt%, at least 17.5 wt%, at least 20 wt%, or at least 22.5 wt% and non-oat starchy ingredients at least 20 wt%, at least 25.0 wt%, at least 30.0 wt%, or at least 35.0 wt% relative to the total weight of the biscuit. Moreover, the ratio of oat-based starchy ingredients over non-oat starchy ingredients is at least 0.25, at least 0.35, at least 0.45, or at least 0.55. The ratio of oat-based starchy ingredients over non-oat starchy ingredients is at most 1, at most 2, at most 3, or at most 4.

Biscuits that contain at least 15 wt% oat-based starchy ingredients contain at least approximately 0.30 g oat β-glucans per serving (50 g) and, hence, provide at least approximately 10% of the required daily consumption of oat β-glucans (3 g) as described in the health claim granted by EFSA.

When strictly using oat-based ingredients, it is hard to obtain a biscuit with the required SDS/(SDS+RDS) value of at least 31 wt%, at least 35 wt%, at least 38 wt%, or at least 40 wt%. This is because oat-based ingredients contain relatively low levels of SDS. Therefore, the biscuit obtained by the method of the disclosure comprises at least 20 wt%, at least 25.0 wt%, at least 30.0 wt%, or at least 35.0 wt% of starchy ingredients relative to the total weight of the biscuit that are not oat-based to compensate for the low level of SDS present in the oat-based starchy ingredients. Examples of non-oat starchy ingredients with high SDS contents are wheat starch/flour/flakes, maize starch/flour/flakes, rice starch/flour/flakes, cassava starch/flour/flakes, pea starch/flour and potato starch/flour.

Preferably, the biscuit has a total starch content of at least 30 wt%, at least 35 wt%, at least 40 wt%, or at least 45 wt% relative to the total weight of the biscuit.

The dough comprises at least 6.8 wt% added water, typically between 8.1 wt% and 12.1 wt% added water, or between 9.1 wt% and 11.1 wt% added water, or between 9.6 wt% and 10.6 wt% added water relative to the total weight of the dough. That is, the added water forms at least 6.8 wt% of the total dough prior to baking. Most of this water is removed from the biscuit (dough) during baking. Added water does not include water that is already present in some of the ingredients (e.g. about 10-15 wt% of cereal flour is water). At least some of the water present in these ingredients is also removed from the biscuit during baking. Hence, the wt% of the starchy ingredients in the dough and in the final biscuit is almost the same as a result of the aforementioned moisture loss. Dough ingredients that do not contain water (e.g. fat) will represent a larger wt% of the biscuit than of the dough. For syrups of sugars, soluble fibres, polyols and the like, the water present in the syrup is considered as part of the added water.

The dough typically does not have a continuous structure like e.g. a bread dough. In contrast, it is rather a collection of disconnected particles. When the dough has a water level lower than 6.8 wt%, it is not process-able and cannot be shaped into biscuits. Doughs with such a low water level behave more like a granular material. Addition of water levels exceeding 12.1 wt% further increases the process-ability of the dough but it also increases the extent of starch gelatinization during baking and, hence, decreases the SDS content of the biscuit.

The moisture content of the starchy ingredients, dough and final biscuit can be determined according to AACC method 44-15 a [AACC-I (1999). Approved methods of analysis (11th ed.). St. Paul, MN, USA: AACC International].

The term "**fat**" or "fats" refers to any lipid source, vegetable or animal source, that is edible and can be used to make a biscuit. Examples include palm oil or other vegetable oils and butter from animal source. Typically, the oat-based biscuit has 5 wt% to 20 wt% fat, or 8 wt% to 17 wt% fat, or 10 wt% to 15 wt% fat relative to the total weight of the biscuit.

"**sugar**" or "**sugars**" refer to the dry matter of any mono and disaccharides, whatever the source, and by extension all the dry matter of the glucose syrup, also called glucose-fructose syrup or fructose-glucose syrup. Monosaccharides include fructose, galactose, glucose, mannose and mixtures thereof. Disaccharides include saccharose, lactose and maltose and mixtures thereof. Glucose syrup contains mono and disaccharides, but also some longer chains of polymerized dextrose. The biscuit obtained by this method comprises typically at most 30 wt% sugar, or at most 28 wt% sugar or at most 25 wt% sugar relative to the total weight of the biscuit. When considering the amount of sugar added to the mixture in the form of a glucose syrup or other sugar suspension, only the dry weight of sugar should be considered. The water present in the syrup should be considered as part of the added water.

Typically the amount of sugar present in the biscuit is at least 12 wt%. This is for both sensory and technical reasons. During dough mixing, a continuous phase is formed by the added water enriched by a part of the soluble ingredients, *i.e.* those that are able to dissolve. Because the sugar is soluble in the added water, it increases the effective volume of the water (1 g of sugar dissolved in 1 mL of water yields a total volume of 1.6 mL). Hence, the presence of sugars lowers the required level of water to be added. It is assumed that the presence of at least 12 wt% sugars decreases the level of water to be added which, by reducing the extent of starch gelatinization during baking, benefits the SDS content of the biscuit.

The biscuit may in certain embodiments further comprise at most 28 wt% of further ingredients, including emulsifiers, leavening agents, vitamins, minerals, salt, flavoring agents, solid pieces and combinations thereof. These additional ingredients are discussed in more detail below.

Examples of emulsifiers that can be used are soybean lecithin, diacetyl tartaric acid esters of mono and diacylglycerols (DATEM) and sodium stearoyl lactylate. Examples of leavening that can be used are ammonium bicarbonate and mixtures of acids and sodium bicarbonate, examples of which are given in Delcour and Hoseney (2010) cited above.

Other ingredients can be vitamins, minerals, salt, flavoring agents and solid pieces. Flavoring agents can be in powder or liquid form.

Solid pieces may be pieces of solid chocolate, fruit pieces, nuts (e.g. hazelnut), etc. Solid pieces bring texture and flavor without changing the SAG content of the biscuit. Within the scope of the disclosure, "fruit pieces" refers to pieces of any sweet, edible part of a plant that resembles fruit, e.g. raisin, fig, prune, orange, cranberry, blueberry, raspberry, strawberry, apricot, blackcurrant, redcurrant, peach, pear, kiwi, banana, apple, lemon, pineapple, tomato. These pieces of fruit are either dried or processed. This wording does not include nuts.

The biscuit may also comprise polyols or soluble fibres. These act in a similar way to sugars in improving the process-ability of the dough without increasing the level of starch gelatinization during baking. The use of polyols or soluble fibres allows to produce a sugar-free or reduced sugar biscuit. Typically, the ingredients comprise less than 20 wt%, less than 10 wt% or less than 5 wt% of polyols or soluble fibres for gastrointestinal tolerance issues and for clean labeling. Similarly as for sugars, only the dry weight of polyols or soluble fibres should be considered.

Due to the loss of water that is naturally present in starchy ingredients during baking, the wt% of the starchy ingredients in the dough and in the final biscuit is almost the same.

The invention relates to methods for producing a biscuit comprising the steps :
- mixing starchy ingredients with fat, sugar and at least 6.8 wt% added water relative to the total weight of the dough, to form a dough;
- sheeting the dough and shaping the dough into the shape of a biscuit;
- baking the biscuit;
wherein the term oat-based starchy ingredients refers to oat flours and/or wholegrain oat flours and/or oat flakes and the term non-oat starchy ingredients to non-oat flours and/or non-oat wholegrain flours and/or non-oat (industrially) isolated starches and/or non-oat flakes;
the total level of starchy ingredients comprises at least 55 wt% of the total weight of the biscuit.

Baking is typically carried out until the moisture content of the baked biscuit is 0.5 wt% to 5.0 wt%. More specifically, the moisture content of the biscuit is between 1 wt% and 4 wt%.

The low water content helps providing a long-term shelf stable product.

### EXAMPLES

The following examples are specific embodiments of the invention.

### Example 1

The oat-based biscuit has the following composition (in percentage of the final biscuit):

| | |
|---|---|
| - dough ingredients | 114.72 wt% |
| - water removal | -14.72 wt% |
| - total | 100.00 wt% |

These biscuits are produced from dough formed with the following ingredients:

| Ingredient | wt% in dough | wt% in biscuit |
|---|---|---|
| Syrup HF42 | 0.35 | 0.41 |
| Emulsifier | 0.77 | 0.88 |
| Powdered egg | 0.59 | 0.68 |
| Inulin | 3.34 | 3.66 |
| Leavening agents | 1.02 | 0.25 |
| Ionized salt | 0.36 | 0.42 |
| FAT | 11.47 | 13.29 |
| SUGAR | 16.35 | 18.94 |
| ADDED WATER | 9.29 | 3.90 |
| Oat flour | 12.11 | 12.51 |
| Oat flakes | 7.64 | 7.91 |
| Maize flour | 18.07 | 18.36 |
| Soft wheat flour | 18.65 | 18.82 |
| Total | 100.00 | 100.00 |
| Relative total wt% after baking | 87.5 | |

The above amounts are expressed in percentage with respect to the weight of, respectively, final biscuit and unbaked dough.

The ingredients of the dough are mixed together in three stages. First, the dry, non-starch containing ingredients are blended for 4 min. Next, water is adde during a 3 min mixing step. Finally, the starch containing ingredients are included during a 2 min mixing stage. After mixing, the dough is immediately sheeted, cut into pieces and shaped.

Shaped dough pieces are then baked for 13 min at 200 °C. During baking, the temperature of the dough remains under 160 °C. At the end of baking, the moisture content is about 3.90%.

When the biscuits are removed from the oven, they are allowed to cool to room temperature.

The biscuit comprises 57.60 wt% starchy ingredients, more in particular 20.42 wt% oat-based starchy ingredients representing 35.45% of the total starchy ingredients. The biscuit has 14.50 wt% fat and 19.34 wt% sugar. Fat represents approximately 29.16% of the total caloric value of the biscuit, while carbohydrate represents approximately 60.67% and more precisely, sugar represents approximately 17.28%. The biscuit has a SDS/(RDS+SDS) ratio of 43.2% and 19.7 g SAG/100 g biscuit. The biscuit has a starch content of 47.2 wt%. The β-glucan content of the biscuit amounts to 0.64 g/100 g biscuit.

### Example 2

The oat-based biscuit has the following composition (in percentage of the final biscuit):

| | |
|---|---|
| - dough ingredients | 113.34 wt% |
| - water removal | -13.34 wt% |
| - total | 100.00 wt% |

These biscuits are produced from dough formed with the following ingredients:

| Ingredient | wt% in dough | wt% in biscuit |
|---|---|---|
| Syrup HF42 | 0.35 | 0.40 |
| Emulsifier | 0.77 | 0.87 |
| Powdered egg | 0.60 | 0.69 |
| Inulin | 3.39 | 3.67 |
| Leavening agents | 1.03 | 0.25 |
| Ionized salt | 0.37 | 0.42 |
| FAT | 11.62 | 13.30 |
| SUGAR | 16.54 | 18.93 |
| ADDED WATER | 9.41 | 5.18 |
| Oat flour | 12.27 | 12.52 |
| Oat flakes | 7.77 | 7.95 |
| Maize starch | 16.97 | 16.97 |
| Soft wheat flour | 18.90 | 18.84 |
| Total | 100.00 | 100.00 |
| Relative total wt% after baking | 88.0 | |

The above amounts are expressed in percentage with respect to the weight of, respectively, final biscuit and unbaked dough.

The ingredients of the dough are mixed together in three stages. First, the dry, non-starch containing ingredients are blended for 4 min. Next, water is added during a 3 min mixing step. Finally, the starch containing ingredients are included during a 2 min mixing stage. After mixing, the dough is immediately sheeted, cut into pieces and shaped.

Shaped dough pieces are then baked for 13 min at 200 °C. During baking, the temperature of the dough remains under 160 °C. At the end of baking, the moisture content is about 5.60%.

When the biscuits are removed from the oven, they are allowed to cool to room temperature.

The biscuit comprises 56.29 wt% starchy ingredients, more in particular 20.48 wt% oat-based starchy ingredients representing 36.38% of the total starchy ingredients. The biscuit has 15.90 wt% fat and 20.70 wt% sugar. Fat represents approximately 31.84% of the total caloric value of the biscuit, while carbohydrate represents approximately 61.58% and more precisely, sugar represents approximately 18.42%. The biscuit has a SDS/(RDS+SDS) ratio of 46.2% and 21.0 g SAG/100 g biscuit. The biscuit has a starch content of 47.1 wt%.

### Example 3

The oat-based biscuit has the following composition (in percentage of the final biscuit):

| | |
|---|---|
| - dough ingredients | 111.67 wt% |
| - water removal | -11.67 wt% |
| - total | 100.00 wt% |

These biscuits are produced from dough formed with the following ingredients:

| Ingredient | wt% in dough | wt% in biscuit |
|---|---|---|
| Syrup HF42 | 0.36 | 0.41 |
| Emulsifier | 0.80 | 0.89 |
| Powdered egg | 0.61 | 0.69 |
| Inulin | 3.49 | 3.72 |
| Leavening agents | 1.07 | 0.26 |
| Ionized salt | 0.38 | 0.43 |
| FAT | 11.96 | 13.49 |
| SUGAR | 16.99 | 19.16 |
| ADDED WATER | 6.76 | 4.25 |
| Oat flour | 12.63 | 12.70 |
| Oat flakes | 8.00 | 8.06 |
| Maize starch | 17.47 | 17.21 |
| Durum wheat semolina | 19.45 | 18.69 |
| Total | 100.00 | 100.00 |
| Relative total wt% after baking | 90.0 | |

The above amounts are expressed in percentage with respect to the weight of, respectively, final biscuit and unbaked dough.

The ingredients of the dough are mixed together in three stages. First, the dry, non-starch containing ingredients are blended for 4 min. Next, water is adde during a 3 min mixing step. Finally, the starch containing ingredients are included during a 2 min mixing stage. After mixing, the dough is immediately sheeted, cut into pieces and shaped.

Shaped dough pieces are then baked for 13 min at 200 °C. During baking, the temperature of the dough remains under 160 °C. At the end of baking, the moisture content is about 4.25%.

When the biscuits are removed from the oven, they are allowed to cool to room temperature.

The biscuit comprises 56.70 wt% starchy ingredients, more in particular 20.79 wt% oat-based starchy ingredients representing 36.67% of the total starchy ingredients. The biscuit has 15.70 wt% fat and 19.40 wt% sugar. Fat represents approximately 31.42% of the total caloric value of the biscuit, while carbohydrate represents approximately 61.02% and more precisely, sugar represents approximately 17.26%. The biscuit has a SDS/(RDS+SDS) ratio of 50.1% and 23.1 g SAG/100 g biscuit. The biscuit has a starch content of 48.0 wt%.

## Claims

1. A biscuit with a slowly-digestible-starch-over-total-available-starch ratio of the biscuit of at least 40%, the biscuit comprising oat-based starchy ingredients and non-oat starchy ingredients, wherein
- the total amount of starchy ingredients comprises at least 55 wt% of the total weight of the biscuit,
- wherein the biscuit comprises at least 15 wt% oat-based starchy ingredients
- wherein the ratio (w/w) of oat-based starchy ingredients over non-oat starchy ingredients is between 1/4 and 4/1.

2. The biscuit according to claim 1, wherein the oat-based starchy ingredients is other than (industrially) isolated oat starch.

3. The biscuit according to claim 1 or 2, wherein the biscuit comprises between 5 wt% to 20 wt% fat.

4. The biscuit according to any one of claims 1 to 3, wherein the biscuit comprises at most 30 wt% sugar.

5. The biscuit according to any one of claims 1 to 4, wherein the biscuit comprises between 5 wt% to 20 wt% fat and comprises at most 30 wt% sugar.

6. The biscuit according to any one of claims 1 to 5, wherein the biscuit comprises at least 20 wt% non-oat starchy ingredients.

7. The biscuit according to claim 6, wherein the non-oat starchy ingredient is durum wheat semolina.

8. The biscuit according to any one of claims 1 to 7, wherein herein the oat-based starchy ingredient comprises at least 30 wt% oat flakes.

9. The biscuit according to any one of claims 1 to 8, wherein the non-oat starchy ingredient comprises maximum 30 wt% isolated starch.

10. The biscuit according to claim 9, wherein the starch is maize starch.

11. The biscuit according to any one of claims 1 to 10, which has a slowly available glucose value of at least 15.0 g/100 g of biscuit.

12. A method for producing a biscuit with a slowly-digestible-starch-over-total-available-starch ratio of at least 40%, the biscuit comprising oat-based starchy ingredients and non-oat starchy ingredients the method comprising:
mixing starchy ingredients with fat, sugar and added water relative to the total weight of the dough, to form a dough;
sheeting the dough and shaping the dough into the shape of a biscuit; and baking the biscuit,
wherein the starchy ingredients are oat-based starchy ingredients and non-oat starchy ingredients wherein the ratio of oat-based starchy ingredients over non-oat starchy ingredients is between 1/4 and 4/1,
in amounts to obtain a biscuit with a total amount of starchy ingredients of at least 55 wt% of the total weight of the biscuit, and comprising at least 15 wt % oat based starchy ingredients other than isolated oat starch.

13. The method according to claim 12, mixing starchy ingredients with fat, sugar and up to 12.1 wt% added water.

14. The method according to claim 12 or 13, mixing starchy ingredients with fat, sugar and between 6.8 and 12.1 wt% added water.
